# EUROPÄISCHE PATENTSCHRIFT

(11) **EP 1 656 508 B1**
(45) Veröffentlichungstag und Bekanntmachung des Hinweises auf die Patenterteilung: **28.10.2009**
(21) Anmeldenummer: 04741257.2
(22) Anmeldetag: 24.07.2004
(51) Int. Cl.: F16C 33/76

(54) **ABDICHTUNG**
SEAL
ETANCHEITE

(30) Priorität: 19.08.2003 DE 10338530
(43) Veröffentlichungstag der Anmeldung: 17.05.2006
(73) Patentinhaber: Schaeffler KG, 91074 Herzogenaurach (DE)
(72) Erfinder: SCHENK, Rainer, 90766 Fürth (DE); PAINTA, Ralph, 91469 Hagenbüchach (DE)
(86) Internationale Anmeldenummer: PCT/EP2004/008304
(87) Internationale Veröffentlichungsnummer: WO 2005/019669

(56) Entgegenhaltungen:
- DE-A- 4 133 777
- DE-A- 10 209 673
- DE-C- 953 597

## Beschreibung

### Gebiet der Erfindung

Die vorliegende Erfindung bezieht sich auf die Abdichtung für ein Wälzlager, die eine Dichtscheibe und / oder eine Dichtkappe umfasst, die einer Nabe zugeordnet ist, welche das Wälzlager außenseitig umschließt. Die Gestaltung der Dichtkappe sieht vor, dass diese das Wälzlager stirnseitig abdeckt. Dagegen steht die Dichtscheibe innenseitig mit einem zylindrischen Abschnitt eines ortsfesten Gehäuse in Verbindung, an dem ein innerer Lagerring des Wälzlagers lagepositioniert ist.

### Hintergrund der Erfindung

Die Funktion und die Lebensdauer des Wälzlagers wird insbesondere durch die Qualität der Abdichtung bestimmt. Von Fahrzeugherstellern wird die Forderung erhoben, Wälzlagerungen beispielsweise für den Zugmitteltrieb der Brennkraftmaschine für die Lebensdauer des Fahrzeugs auszulegen.

Die Patentschrift DE 41 33 777 C2 offenbart eine Abdichtung für ein Wälzlager, das in einer Spannrolle eines Zugmitteltriebs integriert ist. Beidseitig der Wälzkörper umfasst die bekannte Abdichtung Dichtscheiben, die an dem umlaufenden äußeren Lagerring positioniert sind und die innenseitig schleifend an dem inneren Lagerring abgestützt sind. Eine solche Abdichtung ermöglicht einen begrenzten Schutz der Wälzlagerung gegenüber Spritzwasser und Eintritt von Verunreinigungen in das Wälzlager, bzw. einen Schmiermittelaustritt aus dem Wälzlager. Beispielsweise für die im Off-Road-Betrieb eingesetzte Fahrzeuge, die für Wasserdurchfahrten ausgelegt werden, und die einem massiven Schmutzeintritt in den für die Brennkraftmaschine vorgesehenen Einbauraum ausgesetzt sind, ist diese bekannte Abdichtung ungeeignet.

Als Maßnahme, um die Abdichtqualität von Wälzlagerabdichtungen zu verbessern sind Deckel bekannt, mit denen das Wälzlager teilweise stirnseitig abgedeckt ist. Beispielsweise zeigt die DE 953 597 eine Abdichtung, die zwei getrennte elastische Dichtungen umfasst, deren Dichtlippen schleifend auf einer die Welle umschließenden Hülse abgestützt sind. Diesen Dichtungen sind weiterhin zwei getrennt voneinander angeordnete Abdeck- bzw. Dichtscheiben vorangestellt. Außenseitig ist eine gehäusefeste Abdeckscheibe vorgesehen, durch deren zentrale Öffnung die Welle geführt ist. Eine zweite umlaufend angeordnete Dichtscheibe ist an der Welle lagefixiert. Der Aufbau dieser bekannten Abdichtung für ein Wälzlager erfordert eine große axiale Baulänge und verursacht weiterhin mit zwei schleifend angeordneten Dichtlippen eine große Wärmeentwicklung, die sich nachteilig auf die Lebensdauer des Wälzlagers auswirkt.

### Zusammenfassung der Erfindung

Die Nachteile der bekannten Lösungen berücksichtigend, liegt der Erfindung die Aufgabe zugrunde, eine kostengünstig herstellbare Abdichtung für ein Wälzlager in einer kompakten Bauweise zu realisieren, mit einer hohen Abdichtqualität, ohne nachteilige Reibungswärme.

Die zuvor genannte Aufgabenstellung wird durch die Merkmale der Ansprüche 1 und 2 gelöst.

Die Erfindung nach Anspruch 1 schließt als Abdichtung eine Dichtscheibe ein, die zumindest formschlüssig an der rotierenden Nabe befestigt ist, welche das Wälzlager außen umschließt. Dazu ist zwischen der Dichtscheibe und der Nabe ein separates Dichtmittel vorgesehen, der einen sich einstellenden Dichtspalt zwischen diesen Bauteilen wirksam abdichtet. Im eingebauten Zustand der Dichtscheibe ist die elastische Dichtlippe bzw. das separate Abdichtmedium dichtend mit dem Gehäuse verbunden. Dazu weist die Dichtscheibe innenseitig, im Bereich der zentralen Öffnung eine elastische Dichtlippe oder ein separates Abdichtmedium auf, mit der bzw. mit dem der Ringspalt zwischen dem drehstarren Gehäuse und der Dichtscheibe abgedichtet wird. Vorteilhaft ist zumindest die elastische Dichtung so gestaltet, dass sich eine Abstützkraft der an der Nabe lagefixierten, umlaufenden elastischen Dichtung mit zunehmender Drehzahl reduziert. Diese Wirkungsweise verringert entscheidend die Wärmeentwicklung der Abdichtung und verbessert damit die Lebensdauer des Wälzlagers.

Die Erfindung gemäß Anspruch 2 umfasst als Abdichtung eine Dichtkappe, die sowohl formschlüssig als auch kraftschlüssig an der rotierenden, den äußeren Lagerring umschließenden Nabe befestigt ist. Die Dichtkappe erstreckt sich über die gesamte Stirnseite des Wälzlagers. Zur Erzielung einer definierten Einbaulage für die elastische Dichtung bildet die Dichtkappe bzw. die Dichtscheibe einen radial außen von dem Bord und radial innen von einem axial vorstehenden Ansatz begrenzten Einbauraum bzw. Aufnahme. Dieser Einbauraum eignet sich bevorzugt zur Aufnahme eines separaten, elastischen Dichtmittels , mit dem ein sich einstellender Dichtspalt zwischen der Dichtkappe und der Nabe abgedichtet werden kann.

Die zwei erfindungsgemäßen Abdichtkonzepte eignen sich insbesondere, für die Abdichtung eines Wälzlagers, das für ein fliegend gelagertes Bauteil bestimmt ist. Die erfindungsgemäße Dichtscheibe ist dabei zwischen der Nabe und dem drehstarr angeordneten Gehäuse und die Dichtkappe auf der gegenüberliegenden Seite des Wälzlagers angeordnet. Mit der Dichtkappe wird das Wälzlager stirnseitig vollständig abgedeckt, einschließlich der für die Befestigung des fliegend gelagerten Bauteils bzw. des Wälzlagers erforderlichen Verschraubung.

Übereinstimmend zeichnen sich die erfindungsgemäßen Abdichtungen durch eine hohe Abdichtqualität und eine kompakte Bauweise aus. Die Gestaltung dieser Abdichtungen ermöglicht weiterhin eine kostengünstige Herstellung sowie eine einfache Montage. Außerdem ist die erfindungsgemäße Dichtscheibe in Verbindung mit der innenseitigen Abdichtung so ausgeführt, dass sich keine oder eine mit steigender Drehzahl abnehmende Abstützkraft einstellt. Damit verbunden verringert sich entscheidend die Reibungswärme, was sich positiv auf die Lebensdauer des Wälzlagers auswirkt.

Vorteilhafte Ausgestaltungen der Erfindungen sind Gegenstand der abhängigen Ansprüche 3 bis 20.

Vorteilhaft sind die erfindungsgemäßen Abdichtungen für Wälzlager von Umlenkrollen, Bandspannrollen bzw. allgemein Spannrollen oder Riemenscheiben einsetzbar, die für Zugmitteltrieben von Brennkraftmaschinen bestimmt sind. Die mit den erfindungsgemäßen Abdichtungen erzielbare Abdichtqualität verbessert die Wartfähigkeit, ermöglicht Wasserdurchfahrten von Fahrzeugen und hält auch massiven Schmutzeintritt stand. Weiterhin ermöglichen die erfindungsgemäßen Abdichtungen einen zeitlich begrenzten Unterwassereinsatz von Zugmitteltrieben, deren Aggregate bzw. Bauteile wälzgelagerte Riemenscheiben einschließen.

Die Wirksamkeit der erfindungsgemäßen Abdichtung verbessernd ist vorgesehen, die erfindungsgemäße Dichtscheibe bzw. Dichtkappe mit den üblicherweise an Wälzlagern eingesetzten Dichtungen zu kombinieren, zur Erzielung einer zweistufigen Wälzlager-Abdichtung. Den Wälzlagern sind üblicherweise unmittelbar, insbesondere an dem äußeren Lagerring dreh- und lagefixierte Dichtungen oder Dichtelemente zugeordnet, die beispielsweise mit einer Dichtlippe und einer geringen Abstützkraft schleifend oder unter Einhaltung eines Dichtspaltes einem drehstarren inneren Lagerring zugeordnet sind. Diese bekannten, zwischen den Lagerringen eingesetzten und damit im Wälzlager integrierten Abdichtelemente, stellen eine erste Dichtstufe dar, die mit der erfindungsgemäßen vorgelagerten Abdichtung kombiniert, eine zweistufige Abdichtung bilden.

Die Ausgestaltung der Dichtkappe und der Dichtscheibe gemäß der Erfindung sieht vor, diese Bauteile außenseitig mit axial vorstehenden, zumindest partiell umfangsverteilt angeordneten Borden zu versehen. Diese rechtwinklig zu der Dichtkappe bzw. der Dichtscheibe angeordneten Borde sind zur Befestigung an der Nabe vorgesehen, die das Wälzlager außenseitig umschließt. Vorteilhaft bietet es sich an, dass zur Befestigung der Dichtscheibe bzw. der Dichtkappe die Borde bereichsweise die Nabe übergreifen, die das Wälzlager außenseitig umschließt. Die Nabe ist über einen Mittelsteg mit einer radial beabstandeten Lauffläche einstückig verbunden, zur Bildung einer vorzugsweise aus Kunststoff hergestellten Riemenscheibe. Die elastisch ausgebildeten Borde sind so ausgebildet, dass ein Nabendurchmesser den Innendurchmesser der Borde übertrifft, wodurch sich eine kraftschlüssige Befestigung der Dichtscheibe bzw. der Dichtkappe an der Nabe im Einbauzustand einstellt.

Ergänzend und / oder alternativ zu einer kraftschlüssigen Befestigung schließt die Erfindung eine formschlüssige Befestigung ein. Dazu ist der Bord innenseitig zumindest mit einer Wulst versehen, die in der Einbaulage formschlüssig in eine zugehörige Ringnut der Nabe verschnappt. Bei Bedarf bietet es sich an, den Bord mit mehreren axial voneinander getrennten Wulsten zu versehen, die mit entsprechend eingebrachten Ringnuten der Nabe korrespondieren.

Zur Erzielung einer optimalen Abdichtung zwischen der Dichtkappe und der Nabe bzw. der Dichtscheibe und der Nabe, sieht die Erfindung eine elastische separate Dichtung vor. Als Dichtung eignet sich insbesondere ein Rundgummiring bzw. ein O-Ring, der sich in der Einbaulage an der Stirnseite der Nabe und dem Boden der Dichtkappe oder Dichtscheibe abstützt. Außenseitig ist die separate Dichtung von dem zylindrischen, axial vorstehenden Bord der Dichtkappe bzw. der Dichtscheibe geführt.

Der Einbauraum ist vorteilhaft mit einem mittig angeordneten, umlaufenden Sporn versehen, an dem sich die Dichtung abstützt. Der axial vorstehende, endseitig gerundete Sporn greift in der Einbaulage formschlüssig in die Dichtung ein. Aufgrund der geringen Kontaktfläche zwischen dem Sporn und der Dichtung kann der Sporn selbst bei ungünstigen Toleranzlagen ausreichend tief in die Dichtung eindringen, zur Erzielung einer ausreichenden Abdichtqualität.

Bevorzugt schließt die Erfindung aus Kunststoff hergestellte Dichtscheiben bzw. Dichtkappen ein, wobei sich insbesondere für große Stückzahlen ein kostengünstiges Spritzgießverfahren eignet. Alternativ bietet es sich an, die Dichtscheibe bzw. die Dichtkappe aus einem metallischen Werkstoff durch ein Tiefziehverfahren herzustellen.

Eine bevorzugte Ausgestaltung der Erfindung gemäß Anspruch 1 bezieht sich auf die Ausgestaltung der elastischen Dichtung an der Innenseite im Bereich der zentralen Öffnung der Dichtscheibe. Die Dichtlippe dieser Dichtung ist dabei endseitig mit einer außenseitig angeordneten Wulst versehen, die eine Zusatzmasse bildet. Dazu ist die Wulst so angeordnet, dass eine im Massenschwerpunkt der Wulst angreifende Fliehkraft eine Kraftkomponente auslöst, die mit zunehmender Drehzahl sich kontinuierlich von der Abstützfläche abhebt. Damit reduziert sich die Abstützkraft bzw. die Anlagekraft der Dichtlippe an dem zugehörigen zylindrischen Abschnitt des Gehäuses. Diese Maßnahme bewirkt im Stillstand der Brennkraftmaschine eine hohe Abdichtqualität, indem die Dichtlippe mit der maximalen Abstützkraft an der entsprechenden Kontaktfläche anliegt. Bei umlaufender Abdichtung, d.h. beispielsweise laufender Brennkraftmaschine stellt sich eine fliehkraftbedingt mit steigender Drehzahl kontinuierlich abnehmende Abstützkraft der Dichtlippe ein. Mit der Wulstgestaltung der Dichtlippe kann unmittelbar Einfluss auf die Wirkungsweise der Dichtung genommen werden. Insbesondere ist die Anlagekraft der Dichtlippe von der Masse der Wulst und dem axialen Abstand der Wulst zu dem radialen Schenkel bzw. zu einem Drehpunkt der Dichtlippe beeinflussbar. Die fliehkraftbedingte Verlagerung der Dichtlippe hat den Vorteil, dass im Betriebszustand, insbesondere bei hohen Drehzahlen der sich einstellende Schleifkontakt zwischen Dichtlippe und der zugehörigen Kontaktfläche soweit reduziert, dass sich keine nachteilige Reibleistung in Verbindung einer Wärmeentwicklung einstellt. Andererseits stellt sich im Stillstand der Brennkraftmaschine und des Wälzlagers eine hohe Abdichtqualität ein, die beispielsweise auch einen Extremtest, ein vollständiges Eintauchen in ein Wasserbad besteht.

Eine weitere erfindungsgemäße Ausgestaltung der Dichtscheibe sieht vor, dass die mit einer Wulst versehene Dichtlippe sowohl axial nach außen als auch axial nach innen, d. h. in Richtung des Wälzlagers angeordnet werden kann. Abhängig von der Anordnung der Dichtlippe stellt sich fliehkraftbedingt eine im Uhrzeigersinn bzw. im Gegenuhrzeigersinn wirkende, weitestgehend kreisförmige Bewegung um den Anlenkpunkt bzw. Drehpunkt der Dichtlippe ein.

Für eine Dichtscheibe, deren Dichtlippe, versehen mit einer Wulst axial vorstehend angeordnet ist, bietet es sich an, dass die Dichtlippe in der Einbaulage in eine axiale Ringnut des ortsfest angeordneten Gehäuses eingreift. Neben einer geschützten Einbaulage für die Dichtlippe ermöglicht die Außenwandung der Ringnut gleichzeitig eine Begrenzung der fliehkraftbedingten Stellbewegung der Dichtlippe.

Vorteilhaft ist die Dichtlippe als separates Bauteil an dem radial nach innen gerichteten Schenkel der Dichtscheibe befestigt. Die Dichtlippe weist dazu vorzugsweise eine äußere, umlaufende Ringnut auf, in die der Schenkel der Dichtscheibe formschlüssig eingepasst ist. Alternativ schließt die Erfindung eine unmittelbar an den Schenkel der aus Kunststoff hergestellten Dichtscheibe angespritzte Dichtlippe ein.

Eine weitere Ausgestaltung der Erfindung sieht vor, zwischen dem Endabschnitt des radial nach innen gerichteten Schenkels der Dichtscheibe und einem zylindrischen Abschnitt des drehstarren Gehäuses als Abdichtung ein elastisches Medium vorgesehen. Das elastische Medium füllt dabei einen Ringspalt aus, der sich zwischen dem freien Ende von dem Schenkel der Dichtscheibe und dem zylindrischen Abschnitt des Gehäuses bildet. Dazu bietet es sich an, auf den zylindrischen Abschnitt ein mit dem elastischen Medium gefülltes Ringelement mit einem u-förmigen Querschnittsprofil drehfest anzuordnen, in das das Schenkelende der Dichtscheibe eingreift.

Vorzugsweise ist der radiale Schenkel der Dichtscheibe endseitig rechtwinklig abgekantet zur Bildung eines axial vorstehenden, zylindrischen Bordes. In der Einbaulage greift der Bord vorteilhaft spielbehaftet in eine axiale Ringnut des Gehäuses ein. Die Ringnut ist dabei mit dem elastischen Medium gefüllt, dessen Eigenschaft nach einer geringen Betriebszeit eine weitestgehend kontaktfreie Anlage zwischen dem Bord und dem elastischen Medium sicherstellt. Dadurch wird eine nachteilige Erwärmung des elastischen Mediums vermieden, was einen Ausfall dieser Abdichtung zur Folge hätte und andererseits das Wälzlager nachteilig erwärmt.

In vorteilhafter Weise bildet der axiale Bord der Dichtscheibe in Verbindung mit dem elastischen Medium ein Dichtungslabyrinth, mit dem unabhängig vom Betriebszustand der Brennkraftmaschine wirksam ein Feuchtigkeitseintritt oder Eintritt von Verunreinigungen in das Wälzlager unterbunden wird.

Die Ausgestaltung des axial vorstehenden, mit der Dichtscheibe verbundenen Bordes sieht vor, dass dieser innenseitig zylindrisch und außenseitig konisch gestaltet ist. Dieser Aufbau ermöglicht für ein Spritzgießverfahren zur Herstellung der Dichtscheibe eine gewünschte gratfreie konische Kontaktzone des Bordes, die sich vorteilhaft auf das Zusammenwirken mit dem elastischen Medium auswirkt.

Erfindungsgemäß ist bevorzugt als elastisches Medium ein Schmierstoff SF 507 bzw. KE 2 / 3K - 10 gemäß DIN 51 502 eingesetzt. Die Erfindung ist jedoch nicht darauf beschränkt, sondern schließt ebenfalls weitere geeignete alternative elastische Medien ein.

### Kurze Beschreibung der Zeichnungen

Die Erfindung wird anhand von drei, verschiedene Ausführungsbeispiele darstellende Zeichnungen näher erläutert. Es zeigen:
- Figur 1: den Aufbau einer erfindungsgemäßen Abdichtung für ein Wälzlager, die eine Dichtkappe und eine Dichtscheibe um- fasst;
- Figur 2: eine Abdichtung, bei der unterschiedlich zu Figur 1 die Dichtscheibe über ein Abdichtmedium mit dem Gehäuse abgedichtet ist;
- Figur 3: eine Dichtkappengestaltung, bei der eine zwischen der Nabe und der Dichtkappe eingesetzte elastische Dichtung in einem radial von dem Bord und einem Ansatz geführten Einbauraum eingesetzt ist.

### Detaillierte Beschreibung der Zeichnungen

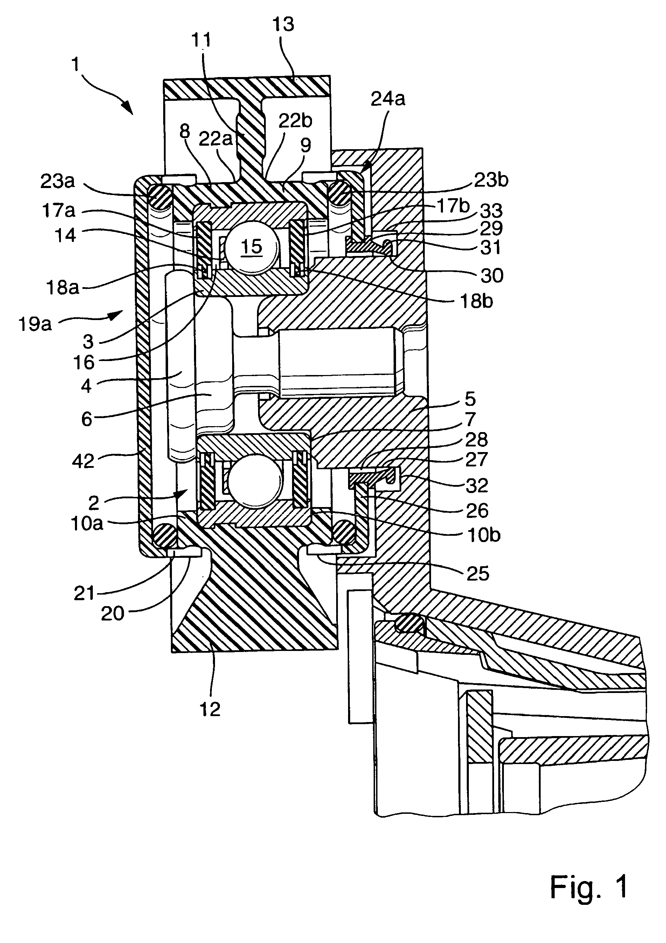

Die Figur 1 zeigt in einer Schnittdarstellung eine fliegend gelagerte Riemenscheibe 1, in der ein Wälzlager 2 integriert ist. Ein innerer Lagerring 3 ist dabei mittels einer Verschraubung 4 drehstarr und lagefixiert mit einem ortsfest angeordneten Gehäuse 5 verbunden. Dabei ist der innere Lagerring 3 auf einem Zentrieransatz 6 der Verschraubung 4 zentriert und an einer Schulter 7 des Gehäuses 5 abgestützt. Ein äußerer Lagerring 8 ist von einer Nabe 9 umschlossen, wobei der äußere Lagerring 8 an radial nach innen gerichteten Schultern 10a, 10b lagefixiert ist. Die Nabe 9 ist über eine Mittenwand 11 sowie umfangsverteilten Stegen 12 mit einer Laufscheibe 13 verbunden, an deren Mantelfläche im eingebauten Zustand der Riemenscheibe 1 ein Zugmittel geführt ist. Die Laufscheibe 13 bildet mit der Nabe 9 ein Bauteil, das vorteilhaft als ein Kunststoffspritzgießteil ausgebildet ist, wobei das Wälzlager 2 als ein Einlegeteil in dem Herstellprozess außenseitig umspritzt wird. Zwischen den Lagerringen 3 und 8 sind in einem Käfig 14 eingesetzte Wälzkörper 15 geführt, wobei ein teilweise mit einem Schmierstoff gefüllter Innenraum 16 des Wälzlagers 2 beidseitig Dichtungen 17a, 17b aufweist. Die jeweils in dem äußeren Lagerring 8 drehfest lagepositionierten Dichtungen 17a, 17b sind über Dichtlippen 18a, 18b an dem inneren Lagerring 3 abgestützt.

Zur Erzielung einer zweistufigen Abdichtung des Wälzlagers 2 weist die Riemenscheibe 1 außenseitig eine Dichtkappe 19a auf, die topfartig geformt, außenseitig rechtwinklig abgekantete, axial vorstehende Borde 20 einschließt. Die jeweils durch Schlitze 21 getrennt angeordneten Borde 20 stützen sich in der Einbaulage der Dichtkappe 19a kraftschlüssig an einem zylindrischen Ansatz 22a der Nabe 9 ab. Die sich über die gesamte Stirnfläche des Wälzlagers 2 einschließlich der Verschraubung 4 erstreckende Dichtkappe 19a ist vorteilhaft aus einem Kunststoff hergestellt, wodurch sich einerseits ein Gewichtsvorteil und andererseits eine vereinfachte Montage einstellt. Als zusätzliche Maßnahme, die Abdichtung der Dichtkappe 19a zu verbessern ist eine Dichtung 23a vorgesehen, welche in der Einbaulage der Dichtkappe 19a zwischen der Nabe 9 und dem Boden 42 der Dichtkappe abgestützt ist und außenseitig von dem Bord 20 umschlossen ist. Vorzugsweise ist als Dichtung 23a ein elastischer Rundgummiring vorgesehen, der sich in der Einbaulage der Dichtkappe 19a verformt und eine wirksame Abdichtung zwischen der Nabe 9 und der Dichtkappe 19a sicherstellt.

Auf der dem Gehäuse 5 zugewandten Seite ist das Wälzlager 2 mit einer Dichtscheibe 24a versehen, die übereinstimmend mit der Dichtkappe 19a über den Bord 25 kraftschlüssig an dem Ansatz 22b der Nabe 9 befestigt ist. Weiterhin ist zwischen der Dichtscheibe 24a und der Stirnseite der Nabe 9 eine Dichtung 23b positioniert. Die Dichtkappe 19a bildet einen radial nach innen gerichteten Schenkel 26, der unter Einhaltung eines Ringspaltes 28 bis an den zylindrischen Abschnitt 27 des Gehäuses 5 geführt ist. Innenseitig ist der Schenkel 26 der Dichtscheibe 24a mit einer elastischen Dichtung 29 versehen, die an dem Schenkel 26 der Dichtscheibe 24a angeschnappt ist, die alternativ an dem Schenkel 26 angespritzt werden kann. Über eine Dichtlippe 30 ist die Dichtung 29 an dem zylindrischen Abschnitt 27 des Gehäuses 5 abgestützt.

An dem freien Ende ist die Dichtlippe 30 außenseitig mit einer Wulst 31 versehen, die eine Zusatzmasse der Dichtlippe 30 bildet. Die Wulst 31 bewirkt, dass sich die Abstützkraft der Dichtlippe 30 mit zunehmender Drehzahl der Riemenscheibe 1 verringert. Die im Massenschwerpunkt der Wulst 31 angreifende Fliehkraft bewirkt eine in Pfeilrichtung, d.h. im Uhrzeigersinn wirkende Stellbewegung der Dichtlippe 30 ausgehend von dem zylindrischen Abschnitt 27 des Gehäuses 5. Vorteilhaft verringert sich mit zunehmender Drehzahl der Riemenscheibe 1 damit die Abstützkraft der Dichtlippe 30 und gleichzeitig eine reibungsbedingte Erwärmung des Gehäuses 5 und des damit in Verbindung stehenden Wälzlagers 2. Die Dichtlippe 30 greift in eine Ringnut 32 des Gehäuses 5, wobei eine Außenwand 33 der Ringnut 32 eine Stellwegbegrenzung der Dichtlippe 30 darstellt, die sich mit zunehmender Drehzahl des Wälzlagers 2 im Uhrzeigersinn bis an die Außenwand 33 verlagert.

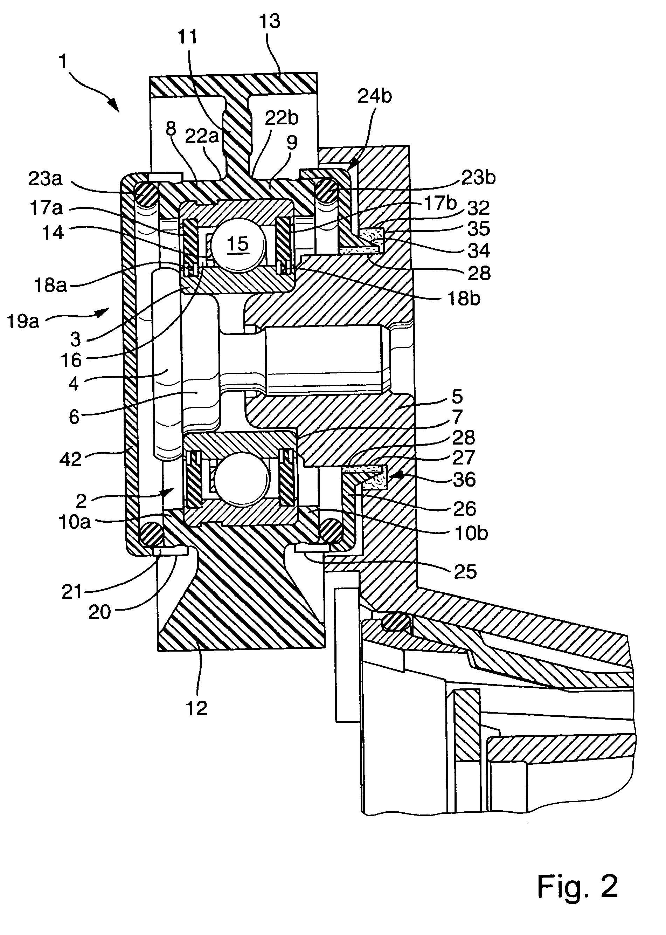

Die Figur 2 zeigt die Riemenscheibe 1, deren Dichtscheibe 24b abweichend zu der Dichtscheibe 24a gemäß Figur 1 gestaltet ist. An den radialen Schenkel 26 der Dichtscheibe 24b schließt sich ein axial vorstehender, in die Ringnut 28 eingreifender Bord 34 an. Die Ringnut 28 ist dabei von einem elastischen Medium 35, insbesondere einem Schmierstoff gefüllt, in die der Bord 34 eingreift. Der Bord 34 ist innenseitig zylindrisch und außenseitig konisch gestaltet. Die Konsistenz des elastischen Mediums 35 ermöglicht, dass nach einer gewissen Einlaufphase sich ein berührungsfreier, enger Dichtspalt zwischen dem Bord 34 einerseits und dem elastischen Medium 35 anderseits einstellt. Dadurch wird eine optimale Dichtwirkung erzielt, und eine nachteilige Wärmeentwicklung vermieden. Das Zusammenwirken des Bordes 34 in Verbindung mit dem elastischen Medium 35 ermöglicht die Bildung eines Dichtungslabyrinths 36, das vorteilhaft eine hohe Dichtqualität sicherstellt.

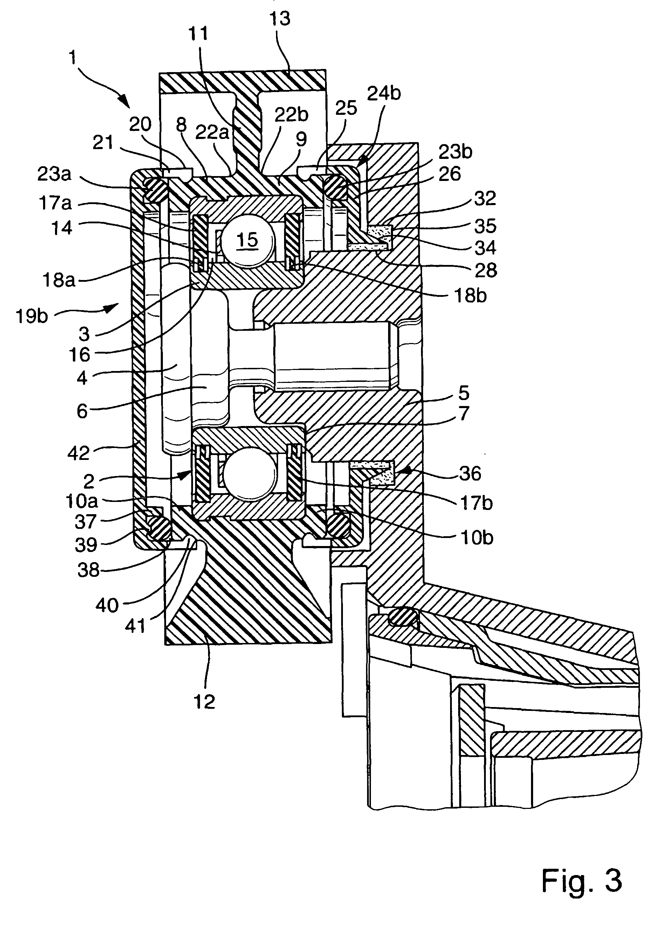

In Figur 3 ist die Dichtkappe 19b der Riemenscheibe 1 abgebildet, mit der eine verbesserte Lageposition der Dichtung 23a erzielt werden kann. Die Dichtkappe 19b definiert einen Einbauraum 38 für die Dichtung 23a, der außenseitig von dem Bord 20 und radial innen von einem Ansatz 37 begrenzt ist. Der Bord 20 in Verbindung mit einem nach innen versetzt angeordneten, von einem Boden 42 ausgehenden Ansatz 37, begrenzt radial den Einbauraum 38 für die Dichtung 23a. Ein von dem Boden 42 der Dichtkappe 19b im Bereich des Einbauraums 38 ausgehender, axial vorstehender Sporn 39 greift aufgrund einer geringen Kontaktfläche lokal in die Dichtung 23a ein und ermöglicht auch bei ungünstigen Toleranzlagen zwischen der Nabe 9 und der Dichtkappe 19b eine optimale ausreichende Dichtwirkung zwischen der Nabe 9 und der Dichtkappe 19b.

Die Figur 3 zeigt weiterhin eine formschlüssige Verbindung der Dichtkappe 19b mit der Nabe 9. Dazu ist der Bord 20 der Dichtkappe 19b innenseitig mit einer umlaufenden Wulst 40 versehen, die in der Einbaulage der Dichtkappe 19b in eine dem zylindrischen Ansatz 22a der Nabe 9 zugehörige Ringnut 41 formschlüssig eingreift. Diese Maßnahmen zur Erzielung einer verbesserten Abdichtqualität mittels des axialen Sporns 39 und zur Befestigung der Dichtkappe 19b an der Nabe 9 mittels der radialen Wulst 40 sind wie in Figur 3 dargestellt, unmittelbar auf die Dichtscheibe 24b übertragbar.

### Bezugszahlen

- 1: Riemenscheibe
- 2: Wälzlager
- 3: Lagerring
- 4: Verschraubung
- 5: Gehäuse
- 6: Zentrieransatz
- 7: Schulter
- 8: Lagerring
- 9: Nabe
- 10a: Schulter
- 10b: Schulter
- 11 1: Mittenwand
- 12: Steg
- 13: Laufscheibe
- 14: Käfig
- 15: Wälzkörper
- 16: Innenraum
- 17a: Dichtung
- 17b: Dichtung
- 18a: Dichtlippe
- 18b: Dichtlippe
- 19a: Dichtkappe
- 19b: Dichtkappe
- 20: Bord
- 21: Schlitz
- 22a: Ansatz
- 22b: Ansatz
- 23a: Dichtung
- 23b: Dichtung
- 24a: Dichtscheibe
- 24b: Dichtscheibe
- 25: Bord
- 26: Schenkel
- 27: Abschnitt
- 28: Ringspalt
- 29: Dichtung
- 30: Dichtlippe
- 31: Wulst
- 32: Ringnut
- 33: Außenwand
- 34: Bord
- 35: Medium (elastisch)
- 36: Dichtungslabyrinth
- 37: Ansatz
- 38: Einbauraum
- 39: Sporn
- 40: Wulst
- 41: Ringnut
- 42: Boden

## Patentansprüche

1. Abdichtung für ein Wälzlager (2), die eine Dichtscheibe (24a, 24b) einschließt, welche außenseitig an einer, das Wälzlager (2) umschließenden, rotierenden Nabe (9) befestigt ist und innenseitig mit einem drehstarren Gehäuse (5) zusammenwirkt, an dem ein innerer Lagerring (3) des Wälzlagers (2) lagepositioniert ist, **dadurch gekennzeichnet, dass** die Dichtscheibe (24a, 24b) zumindest formschlüssig an der Nabe (9) befestigt ist, wobei zwischen der Dichtscheibe (24a, 24b) und der Nabe (9) ein separates elastisches Dichtmittel vorgesehen ist und die Dichtscheibe (24a, 24b) innenseitig mittels einer elastischen Dichtung (29) oder eines elastischen Mediums (35) dichtend mit dem Gehäuse (5) verbunden ist, wobei sich zumindest eine Abstützkraft der elastischen Dichtung (29) mit zunehmender Drehzahl des Wälzlager verringert.

2. Abdichtung für ein Wälzlager, die eine topfförmig gestalteter Dichtkappe (19a, 19b) umfasst, die einer, das Wälzlager (2) außen umschließenden Nabe (9) zugeordnet ist und das Wälzlager (2) stirnseitig abdeckt, **dadurch gekennzeichnet, dass** die Dichtkappe (19a, 19b) formschlüssig und kraftschlüssig an der Nabe (9) befestigt ist und ein separates, elastisches Dichtmittel, die Dichtung (23a), in einem radial außen von dem Bord (20) und radial innen von einem axial vorstehenden Ansatz (37) begrenzten Einbauraum (38) bzw. Aufnahme der Dichtkappe (19b) bzw. der Dichtscheibe (24b) eingesetzt ist.

3. Abdichtung nach Anspruch 1 oder nach Anspruch 2, bestimmt für ein Wälzlager (2), das bevorzugt für eine Umlenkrolle, Spannrolle oder Riemenscheibe eines Zugmitteltriebs eingesetzt ist.

4. Abdichtung nach Anspruch 1 oder nach Anspruch 2, die gemeinsam mit einer ersten unmittelbar zwischen dem inneren Lagerring (3) und dem äußeren Lagerring (8) des Wälzlagers (2) eingesetzten Dichtung (17a, 17b) eine zweistufige Abdichtung bilden.

5. Abdichtung nach Anspruch 1 oder nach Anspruch 2, wobei die Dichtkappe (19a, 19b) und die Dichtscheibe (24a, 24b) außenseitig axial vorstehende, zumindest partiell angeordnete Borde (20) aufweist, mit denen die Dichtkappe (19a, 19b) und die Dichtscheibe (24a, 24b) kraftschlüssig an der Nabe (9) befestigt ist.

6. Abdichtung nach Anspruch 5, wobei der Bord (20) zumindest eine radial nach innen weisende Wulst (40) aufweist, die in einer Einbaulage formschlüssig in eine zugehörige Ringnut (41) der Nabe (20) verschnappt.

7. Abdichtung nach Anspruch 1 oder nach Anspruch 2, bei der zwischen der Nabe (9) und einem radialen Schenkel (26) der Dichtscheibe (24a, 24b) einerseits oder einem Boden (42) der Dichtkappe (19a, 19b) anderseits eine elastische Dichtung (23a, 23b) vorgesehen ist.

8. Abdichtung nach Anspruch 7, wobei als Dichtung (23a, 23b) zwischen der Nabe (9) und dem radialen Schenkel (26) der Dichtscheibe (24a, 24b) einerseits oder dem Boden (42) der Dichtkappe (19a, 19b) anderseits ein O-Ring oder ein Rundgummiring eingesetzt ist.

9. Abdichtung nach Anspruch 2, wobei die Dichtung (23a, 23b) in einer Einbaulage an einem bodenseitig angeordneten, axial in den Einbauraum (38) ragenden, umlaufenden Sporn (39) abgestützt ist.

10. Abdichtung nach Anspruch 1 oder nach Anspruch 2, bei der die Dichtkappe (19a, 19b) und die Dichtscheibe (24a, 24b) bevorzugt aus einem Kunststoff hergestellt sind.

11. Abdichtung nach Anspruch 1, wobei in einer Einbaulage der Dichtscheibe (24a) die Dichtung (29) mit einer axial ausgerichteten Dichtlippe (30) an einem zylindrischen Abschnitt (27) des Gehäuses (5) dichtend abgestützt ist.

12. Abdichtung nach Anspruch 11, bei der die Dichtlippe (30) der Dichtung (29) endseitig eine nach außen gerichtete Wulst (31) aufweist, die so angeordnet ist, dass eine im Massenschwerpunkt der Wulst (31) angreifende Fliehkraft, eine abhängig von der Einbaulage der Dichtlippe (30) im Uhrzeigersinn bzw. im Gegenuhrzeigersinn wirkende, die Abstützkraft der Dichtlippe (30) reduzierende Kraftkomponente auslöst.

13. Abdichtung nach Anspruch 12, wobei die Dichtlippe (30) der Dichtung (29) in der Einbaulage in eine axiale Ringnut (32) des Gehäuses (5) eingreift, wobei eine radiale Außenwand (33) der Ringnut (32) eine fliehkraftbedingte Verstellung der Dichtlippe (30) begrenzt.

14. Abdichtung nach Anspruch 12, bei der die Dichtung (29) verbunden mit der elastischen Dichtlippe (30) an einem radial nach innen gerichteten Schenkel (26) der Dichtscheibe (24a, 24b) angespritzt oder formschlüssig verschnappt ist.

15. Abdichtung nach Anspruch 1, bei der die Dichtscheibe (24b) mit dem radial nach innen gerichteten Schenkel (26) unter Einhaltung eines von einem elastischen Medium (35) ausgefüllten Ringspalt (28) bis zu einem zylindrischen Abschnitt (27) des Gehäuses (5) geführt ist.

16. Abdichtung nach Anspruch 1, wobei der radial nach innen gerichtete Schenkel (26) der Dichtscheibe (24b) endseitig rechtwinkelig abgekantet ist und einen axial vorstehenden Bord (34) bildet, der in einer Einbaulage spielbehaftet in eine Ringnut (32) des Gehäuses (5) eingreift.

17. Abdichtung nach Anspruch 16, wobei der axial vorstehende, zylindrische Bord (34) der Dichtscheibe (24b) in die von einem Schmierstoff bzw. einem elastischen Medium (35) gefüllte Ringnut (32) eingreift.

18. Abdichtung nach Anspruch 17, bei der das elastische Medium (35) in Verbindung mit dem Bord (34) der Dichtscheibe (24b) ein Dichtungslabyrinth (36) bildet.

19. Abdichtung nach Anspruch 16, wobei der Bord (34) der Dichtscheibe (24b) innenseitig zylindrisch und außenseitig konisch gestaltet ist.

20. Abdichtung nach zumindest einem der Ansprüche 15 oder 17, wobei als elastisches Medium (35) bevorzugt ein Schmierstoff KE 2/3 K gemäß DIN 51 502 in den Ringspalt (28) oder die Ringnut (32) eingesetzt ist.

## Claims

1. Seal for a rolling bearing (2), which seal includes a sealing disc (24a, 24b) which is fastened at the outside to a rotating hub (9) surrounding the rolling bearing (2) and which interacts at the inside with a rotationally fixed housing (5) on which an inner bearing ring (3) of the rolling bearing (2) is positioned, **characterized in that** the sealing disc (24a, 24b) is fastened at least in a positively locking manner to the hub (9), with a separate elastic sealing means being provided between the sealing disc (24a, 24b) and the hub (9), and with the sealing disc (24a, 24b) being sealingly connected at the inside to the housing (5) by means of an elastic seal (29) or an elastic medium (35), with at least one support force of the elastic seal (29) being reduced with increasing rotational speed of the rolling bearing.

2. Seal for a rolling bearing, which seal comprises a pot-shaped sealing cap (19a, 19b) which is assigned to a hub (9) surrounding the rolling bearing (2) at the outside and which covers the rolling bearing (2) at the end side, **characterized in that** the sealing cap (19a, 19b) is fastened to the hub (9) in a positively locking and non-positively locking fashion and a separate elastic sealing means, the seal (23a), is inserted in an installation space (38) or receptacle, which is delimited radially at the outside by the rim (20) and radially at the inside by an axially protruding projection (37), of the sealing cap (19b) and of the sealing disc (24b).

3. Seal according to Claim 1 or according to Claim 2, designed for a rolling bearing (2) which is used preferably for a deflecting roller, tensioning roller or belt pulley of a traction mechanism drive.

4. Seal according to Claim 1 or according to Claim 2 which forms a two-stage sealing arrangement together with a first seal (17a, 17b) inserted directly between the inner bearing ring (3) and the outer bearing ring (8) of the rolling bearing (2).

5. Seal according to Claim 1 or according to Claim 2, with the sealing cap (19a, 19b) and the sealing disc (24a, 24b) having, at the outside, axially protruding, at least partially arranged rims (20) by means of which the sealing cap (19a, 19b) and the sealing disc (24a, 24b) are fastened in a non-positively locking fashion to the hub (9).

6. Seal according to Claim 5, with the rim (20) having at least one radially inwardly pointing bead (40) which, in an installed position, snaps in a positively locking fashion into an associated annular groove (41) of the hub (20).

7. Seal according to Claim 1 or according to Claim 2, in which an elastic seal (23a, 23b) is provided between the hub (9) and, at one side, a radial limb (26) of the sealing disc (24a, 24b), or at the other side, a base (42) of the sealing cap (19a, 19b).

8. Seal according to Claim 7, with an O ring or a round rubber ring being inserted between the hub (9) and, at one side, the radial limb (26) of the sealing disc (24a, 24b), or at the other side, the base (42) of the sealing cap (19a, 19b).

9. Seal according to Claim 2, with the seal (23a, 23b) being supported, in an installed position, against an encircling spur (39) which is arranged on the base and which protrudes axially into the installation space (38).

10. Seal according to Claim 1 or according to Claim 2, in which the sealing cap (19a, 19b) and the sealing disc (24a, 24b) are produced preferably from a plastic.

11. Seal according to Claim 1, in which, in an installed position of the sealing disc (24a), the seal (29) is sealingly supported with an axially aligned sealing lip (30) against a cylindrical section (27) of the housing (5).

12. Seal according to Claim 11, in which the sealing lip (30) of the seal (29) has, at the end side, an outwardly directed bead (31) which is arranged such that a centrifugal force which engages on the mass centre of gravity of the bead (31) generates a force component which acts clockwise or anticlockwise depending on the installation position of the sealing lip (30) and reduces the support force of the sealing lip (30).

13. Seal according to Claim 12, with the sealing lip (30) of the seal (29) engaging, in the installed position, into an axial annular groove (32) of the housing (5), with a radial outer wall (33) of the annular groove (32) delimiting a centrifugal-force-induced adjustment of the sealing lip (30).

14. Seal according to Claim 12, in which the seal (29), connected to the elastic sealing lip (30), is injection-moulded, or snapped in a positively locking manner, onto a radially inwardly directed limb (26) of the sealing disc (24a, 24b).

15. Seal according to Claim 1, in which the sealing disc (24b) extends with the radially inwardly directed limb (26) up to a cylindrical section (27) of the housing (5) so as to maintain an annular gap (28) which is filled with an elastic medium (35).

16. Seal according to Claim 1, with the radially inwardly directed limb (26) of the sealing disc (24b) being bent at right angles, and forming an axially protruding rim (34), at the end side, which rim (34), in the installed state, engages with play into an annular groove (32) of the housing (5).

17. Seal according to Claim 16, with the axially protruding cylindrical rim (34) of the sealing disc (24b) engaging into the annular groove (32) which is filled with a lubricant or an elastic medium (35).

18. Seal according to Claim 17, in which the elastic medium (35) forms a labyrinth seal together with the rim (34) of the sealing disc (24b).

19. Seal according to Claim 16, in which the rim (34) of the sealing disc (24b) is of cylindrical design at the inside and of conical design at the outside.

20. Seal according to at least one of Claims 15 or 17, in which preferably a lubricant KE 2/3 K in accordance with DIN 51 502 is inserted as elastic medium (35) into the annular gap (28) or the annular groove (32).

## Revendications

1. Système d'étanchéité pour un palier à roulement (2) qui inclut une rondelle d'étanchéité (24a, 24b) qui est fixée du côté extérieur à un moyeu (9) rotatif entourant le palier à roulement (2) et qui coopère du côté intérieur avec un boîtier (5) immobile en rotation, sur lequel est positionnée une bague de palier interne (3) du palier à roulement (2), **caractérisé en ce que** la rondelle d'étanchéité (24a, 24b) est fixée au moins par engagement par correspondance géométrique au moyeu (9), un moyen d'étanchéité élastique séparé étant prévu entre la rondelle d'étanchéité (24a, 24b) et le moyeu (9), et la rondelle d'étanchéité (24a, 24b) étant connectée de manière hermétique au boîtier (5) du côté intérieur au moyen d'un joint d'étanchéité élastique (29) ou d'un milieu élastique (35), au moins une force de support du joint d'étanchéité élastique (29) diminuant en fonction de l'augmentation de la vitesse de rotation du palier à roulement.

2. Système d'étanchéité pour un palier à roulement, qui comprend un capuchon d'étanchéité (19a, 19b) en forme de pot, qui est associé à un moyeu (9) entourant à l'extérieur le palier à roulement (2) et qui recouvre le palier à roulement (2) du côté frontal, **caractérisé en ce que** le capuchon d'étanchéité (19a, 19b) est fixé par engagement par correspondance géométrique et par force au moyeu (9) et un moyen d'étanchéité élastique séparé, le joint d'étanchéité (23a), est inséré dans un espace d'insertion (38) ou un logement du capuchon d'étanchéité (19b) ou de la rondelle d'étanchéité (24b) limité radialement à l'extérieur par le bord (20) et radialement à l'intérieur par un insert (37) saillant axialement.

3. Système d'étanchéité selon la revendication 1 ou selon la revendication 2, prévu pour un palier à roulement (2), qui est utilisé de préférence pour un galet déflecteur, un galet de serrage ou une poulie à courroie d'un mécanisme à éléments de traction.

4. Système d'étanchéité selon la revendication 1 ou selon la revendication 2, qui forme, conjointement avec un premier joint d'étanchéité (17a, 17b) inséré directement entre la bague de palier intérieure (3) et la bague de palier extérieure (8) du palier à roulement (2), un système d'étanchéité à deux étages.

5. Système d'étanchéité selon la revendication 1 ou selon la revendication 2, dans lequel le capuchon d'étanchéité (19a, 19b) et la rondelle d'étanchéité (24a, 24b) présentent du côté extérieur des bords (20) disposés au moins en partie et saillant axialement, avec lesquels le capuchon d'étanchéité (19a, 19b) et la rondelle d'étanchéité (24a, 24b) sont fixés par engagement par force au moyeu (9).

6. Système d'étanchéité selon la revendication 5, dans lequel le bord (20) présente au moins un bourrelet (40) tourné radialement vers l'intérieur, qui s'encliquète dans une position d'insertion par engagement par correspondance géométrique dans une rainure annulaire associée (41) du moyeu (9).

7. Système d'étanchéité selon la revendication 1 ou selon la revendication 2, dans lequel, entre le moyeu (9) et une branche radiale (26) de la rondelle d'étanchéité (24a, 24b) d'une part, ou un fond (42) du capuchon d'étanchéité (19a, 19b) d'autre part, est prévu un joint d'étanchéité élastique (23a, 23b).

8. Système d'étanchéité selon la revendication 7, dans lequel un joint torique ou une bague en caoutchouc ronde est inséré(e) en tant que joint d'étanchéité (23a, 23b) entre le moyeu (9) et la branche radiale (26) de la rondelle d'étanchéité (24a, 24b) d'une part ou le fond (42) du capuchon d'étanchéité (19a, 19b) d'autre part.

9. Système d'étanchéité selon la revendication 2, dans lequel le joint d'étanchéité (23a, 23b) est supporté dans une position d'insertion sur un éperon (39) périphérique disposé du côté du fond, saillant axialement dans l'espace d'insertion (38).

10. Système d'étanchéité selon la revendication 1 ou selon la revendication 2, dans lequel le capuchon d'étanchéité (19a, 19b) et la rondelle d'étanchéité (24a, 24b) sont fabriqués de préférence en une matière plastique.

11. Système d'étanchéité selon la revendication 1, dans lequel, dans une position d'insertion de la rondelle d'étanchéité (24a), le joint d'étanchéité (29) est supporté de manière hermétique avec une lèvre d'étanchéité (30) orientée axialement sur une portion cylindrique (27) du boîtier (5).

12. Système d'étanchéité selon la revendication 11, dans lequel la lèvre d'étanchéité (30) du joint d'étanchéité (29) présente à une extrémité un bourrelet (31) orienté vers l'extérieur, qui est agencé de telle sorte qu'une force centrifuge agissant au centre de masse du bourrelet (31) déclenche une composante de force réduisant la force de support de la lèvre d'étanchéité (30), agissant en fonction de la position d'insertion de la lèvre d'étanchéité (30) dans le sens des aiguilles d'une montre ou dans le sens inverse.

13. Système d'étanchéité selon la revendication 12, dans lequel la lèvre d'étanchéité (30) du joint d'étanchéité (29) vient en prise dans la position d'insertion dans une rainure annulaire axiale (32) du boîtier (5), une paroi extérieure radiale (33) de la rainure annulaire (32) limitant un déplacement de la lèvre d'étanchéité (30) dû à la force centrifuge.

14. Système d'étanchéité selon la revendication 12, dans lequel le joint d'étanchéité (29), connecté à la lèvre d'étanchéité élastique (30), est moulé ou encliqueté par engagement par correspondance géométrique sur une branche (26) de la rondelle d'étanchéité (24a, 24b) orientée radialement vers l'intérieur.

15. Système d'étanchéité selon la revendication 1, dans lequel la rondelle d'étanchéité (24b) est guidée avec la branche (26) orientée radialement vers l'intérieur en conservant une fente annulaire (28) remplie d'un milieu élastique (35) jusqu'à une portion cylindrique (27) du boîtier (5).

16. Système d'étanchéité selon la revendication 1, dans lequel la branche (26) de la rondelle d'étanchéité (24b) orientée radialement vers l'intérieur est coudée à angle droit du côté de l'extrémité et forme un bord saillant axialement (34), qui vient en prise dans une position d'insertion avec un certain jeu dans une rainure annulaire (32) du boîtier (5).

17. Système d'étanchéité selon la revendication 16, dans lequel le bord cylindrique saillant axialement (34) de la rondelle d'étanchéité (24b) vient en prise dans la rainure annulaire (32) remplie d'un lubrifiant ou d'un milieu élastique (35).

18. Système d'étanchéité selon la revendication 17, dans lequel le milieu élastique (35) forme en liaison avec le bord (34) de la rondelle d'étanchéité (24b) un labyrinthe d'étanchéité (36).

19. Système d'étanchéité selon la revendication 16, dans lequel le bord (34) de la rondelle d'étanchéité (24b) est configuré sous forme cylindrique du côté intérieur et conique du côté extérieur.

20. Système d'étanchéité selon au moins l'une quelconque des revendications 15 ou 17, dans lequel on utilise comme milieu élastique (35) de préférence un lubrifiant KE 2/3 K selon DIN 51 502 dans la fente annulaire (28) ou la rainure annulaire (32).
